(19) Europäisches Patentamt
European Patent Office
Office européen des brevets

(11) **EP 4 226 565 B1**

(12) **EUROPÄISCHE PATENTSCHRIFT**

(45) Veröffentlichungstag und Bekanntmachung des Hinweises auf die Patenterteilung:
**19.11.2025 Patentblatt 2025/47**

(21) Anmeldenummer: **21786121.0**

(22) Anmeldetag: **27.09.2021**

(51) Internationale Patentklassifikation (IPC):
*H04L 5/14* (2006.01)    *H04L 27/10* (2006.01)
*H04L 27/12* (2006.01)    *H04L 27/14* (2006.01)

(52) Gemeinsame Patentklassifikation (CPC):
**H04L 5/14; H04L 5/1461; H04L 27/106;
H04L 27/12; H04L 27/14**

(86) Internationale Anmeldenummer:
**PCT/EP2021/076541**

(87) Internationale Veröffentlichungsnummer:
**WO 2022/073792 (14.04.2022 Gazette 2022/15)**

(54) **VERFAHREN UND SYSTEM ZUR DATENÜBERTRAGUNG**

METHOD AND SYSTEM FOR DATA COMMUNICATION

PROCÉDÉ ET SYSTÈME DE COMMUNICATION DE DONNÉES

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **09.10.2020 DE 102020006225**

(43) Veröffentlichungstag der Anmeldung:
**16.08.2023 Patentblatt 2023/33**

(73) Patentinhaber: **SEW-EURODRIVE GmbH & Co. KG
76646 Bruchsal (DE)**

(72) Erfinder:
- **WANJEK, Andreas
  68753 Waghäusel (DE)**
- **KNAB, Alexander
  68789 St. Leon-Rot (DE)**

(56) Entgegenhaltungen:
**US-A- 5 101 505    US-A- 5 493 583
US-B2- 9 036 749**

EP 4 226 565 B1

**Beschreibung**

Die Erfindung betrifft ein Verfahren zur Datenübertragung zwischen einem ersten Teilnehmer und einem zweiten Teilnehmer. Die Erfindung betrifft auch ein System zur Datenübertragung, welches mindestens einen ersten Teilnehmer und einen zweiten Teilnehmer umfasst.

Sensoren für Radarmessungen werden in vielen Anwendungen, beispielsweise zur Erfassung von Abstand, Winkel, Geschwindigkeit, eingesetzt. Der Sender eines Radarsensors umfasst meist eine Phasenregelschleife (PLL / Phase-Locked-Loop). Um eine Kommunikation zu ermöglichen, wird das Sendesignal moduliert. Die zu übertragenden Daten werden mittels eines spannungsgesteuerten Oszillators (VCO / Voltage Controlled Oscillator) in Form von unterschiedlichen Frequenzen erzeugt (MFSK - Multi Frequency Shift Keying). Eine Datenübertragung zwischen Radarsensoren erfolgt insbesondere im Halbduplex-Modus. Das bedeutet, ein Radarsensor kann entweder Daten senden oder Daten empfangen, aber nicht beides gleichzeitig.

Zur Übertragung von Daten ist aus dem Stand der Technik die Frequenzmodulation bekannt. Dabei handelt es sich um ein Modulationsverfahren, bei dem eine Trägerfrequenz durch ein zu übertragendes Signal verändert wird. Die Frequenzmodulation ermöglicht gegenüber anderen Modulationsverfahren, beispielsweise der Amplitudenmodulation, einen höheren Dynamikumfang des Informationssignals. Weiterhin ist die Frequenzmodulation weniger anfällig gegenüber Störungen.

Aus dem Dokument " A 10 Mb/s Hybrid Two-Point Modulator with Front-End Phase Selection and Dual-Path DCO Modulation" ist ein Modulator zur Erzeugung eines Ausgangssignals bekannt. Der Modulator weist eine Phasenregelschleife, welche auch als "Phase-Locked Loop" (PLL) bezeichnet wird, mit einem spannungsgesteuerten Oszillator welcher auch als "Voltage Controlled Oszillator" (VCO) bezeichnet wird, auf.

Das Dokument "A low Power Transmitter for Phase-Shift Keying Modulation Schemes", 2006 IEEE, offenbart ein Modulationssystem zur Erzeugung eines Ausgangssignals. Das Modulationssystem weist ebenfalls eine Phasenregelschleife mit einem spannungsgesteuerten Oszillator auf.

Das Dokument US 2018/0031673 A1 offenbart ein Verfahren zur Datenübertragung, wobei ein erster Teilnehmer ein moduliertes erstes Datensignal mit ersten Daten sendet und ein zweites Datensignal mit zweiten Daten empfängt.

Das Dokument EP 3 502 731 A1 offenbart eine Vorrichtung zum Detektieren von Personen und zur Übertragung von Informationen, wobei die Vorrichtung einen Sender zum Senden eines Sendesignals und einen Empfänger zum Empfangen eines Echos des Sendesignals aufweist.

Das Dokument US 2019/0361113A1 offenbart ein System mit einem Sender zur Datenübertragung mit einer Sendeantenne und einen Empfänger zum Datenempfang mit einer Empfangsantenne.

Das Dokument US 2016/0047892 A1 offenbart ein Verfahren zur Nutzung einer Radareinheit zur Datenkommunikation, wobei ein Signal empfangen wird, und das Signal verarbeitet wird, um simultan Daten und Zeitinformationen zu bestimmen.

Das Dokument US 5,101,505 A offenbart ein Verfahren und eine Vorrichtung zur selektiven Korrektur von Seitenbandsignalen in einem drahtlosen Kommunikationssystem.

Das Dokument US 5,493,583 A offenbart ein Modul zur drahtlosen Kommunikation mittels Frequenzmodulation. Das Modul umfasst eine Sendeantenne und eine Empfangsantenne.

Das Dokument US 9,036,749 B2 offenbart ein System und ein Verfahren zur analogen Unterdrückung von Interferenzen.

Der Erfindung liegt die Aufgabe zugrunde, ein Verfahren und ein System zur Datenübertragung mittels Frequenzmodulation weiterzubilden.

Die Aufgabe wird durch ein Verfahren zur Datenübertragung mit den im Anspruch 1 angegebenen Merkmalen gelöst. Vorteilhafte Ausgestaltungen und Weiterbildungen sind Gegenstand der Unteransprüche. Die Aufgabe wird auch durch ein System zur Datenübertragung mit den in Anspruch 9 angegebenen Merkmalen gelöst. Vorteilhafte Ausgestaltungen und Weiterbildungen sind Gegenstand der Unteransprüche.

Bei einem erfindungsgemäßen Verfahren zur Datenübertragung zwischen einem ersten Teilnehmer und einem zweiten Teilnehmer sendet der erste Teilnehmer ein frequenzmoduliertes erstes Datensignal mit ersten Daten, welches der zweite Teilnehmer empfängt, und der zweite Teilnehmer sendet ein frequenzmoduliertes zweites Datensignal mit zweiten Daten, welches der erste Teilnehmer empfängt. Dabei sind die ersten Daten als binäre Bitfolge mit ersten Bits in dem frequenzmodulierten ersten Datensignal enthalten, und die zweiten Daten sind als binäre Bitfolge mit zweiten Bits in dem frequenzmodulierten zweiten Datensignal enthalten. Dabei werden das erste Datensignal und das zweite Datensignal zu einem ersten Mischsignal gemischt, und durch eine Auswertung eines Mischspektrums des ersten Mischsignals und der ersten Bits des ersten Datensignals werden die zweiten Bits des zweiten Datensignals ermittelt. Dabei werden auch das erste Datensignal und das zweite Datensignal zu einem zweiten Mischsignal gemischt, und durch eine Auswertung eines Mischspektrums des zweiten Mischsignals und der zweiten Bits des zweiten Datensignals werden die ersten Bits des ersten Datensignals ermittelt.

Bei den Teilnehmern handelt es sich um Radarsensoren. Das erfindungsgemäße Verfahren gestattet somit eine Vollduplex Kommunikation zwischen zwei Radarsensoren. Eine Kommunikation mittels Radarsensoren ist verhältnismäßig robust gegen Störungen und über verhältnismäßig große Übertragungsstrecken einsetzbar. Das erfindungsgemäße Verfahren gestattet insbesondere, dass beide Teilnehmer gleichzeitig senden und empfangen können. Durch die Auswertung des Mischspektrums und der Bits des eigenen Datensignals werden die Bis des eigenen Datensignals aus dem Mischsignal eliminiert, und die Bits des Datensignals des anderen Teilnehmers werden ermittelt.

Erfindungsgemäß wird das erste Mischsignal von einem ersten Tiefpassfilter zu einem ersten Basissignal gefiltert, und durch eine Verknüpfung von Spektralanteilen eines Basisspektrums des ersten Basissignals mit den ersten Bits des ersten Datensignals werden von einer ersten Signalverarbeitungseinheit die zweiten Bits des zweiten Datensignals berechnet. Auch wird das zweite Mischsignal von einem zweiten Tiefpassfilter zu einem zweiten Basissignal gefiltert, und durch eine Verknüpfung von Spektralanteilen eines Basisspektrums des zweiten Basissignals mit den zweiten Bits des zweiten Datensignals werden von einer zweiten Signalverarbeitungseinheit die ersten Bits des ersten Datensignals berechnet. Eine Bestimmung der hochfrequenten Anteile der Mischspektren der Mischsignale ist somit nicht erforderlich. Alle übertragenen Daten sind in den niederfrequenten Anteilen der Mischspektren enthalten.

Die Verknüpfung der Spektralanteile des Basisspektrums des Basissignals mit den Bits des eigenen Datensignals stellt eine Auswertung des Mischspektrums des Mischsignals und der Bits des eigenen Datensignals dar. Durch diese Auswertung werden somit die Bits des jeweils anderen Teilnehmers ermittelt.

Gemäß einer vorteilhaften Ausgestaltung der Erfindung wird das erste Datensignal von einem ersten spannungsgesteuerten Oszillator erzeugt, und das zweite Datensignal wird von einem zweiten spannungsgesteuerten Oszillator erzeugt. Spannungsgesteuerte Oszillatoren gestatten einfach durch Anlegen einer definierten Spannung die Erzeugung eines zu sendenden Datensignals mit einer bestimmten Frequenz. Durch einfache Variation der angelegten Spannung ist eine Frequenzmodulation einfach durchführbar.

Gemäß einer vorteilhaften Weiterbildung der Erfindung werden das erste Datensignal und das zweite Datensignal von einem ersten Multiplizierer durch Multiplikation zu dem ersten Mischsignal gemischt. Ferner werden das erste Datensignal und das zweite Datensignal von einem zweiten Multiplizierer durch Multiplikation zu dem zweiten Mischsignal gemischt. Die so entstandenen Mischsignale sind dabei gleich und sind jedem Teilnehmer bekannt. Die Mischspektren der Mischsignale weisen jeweils hochfrequente Anteile und niederfrequente Anteile auf.

Gemäß einer bevorzugten Ausgestaltung der Erfindung weist ein erstes Bit des ersten Datensignals eine erste Frequenz auf, welche sich von einer Grundfrequenz um einen ersten Frequenzhub unterscheidet, und ein zweites Bit des zweiten Datensignals weist eine zweite Frequenz auf, welche sich von einer Grundfrequenz um einen zweiten Frequenzhub unterscheidet. Dadurch ist eine Frequenzmodulation bei der Datenübertragung verhältnismäßig einfach durchführbar.

Gemäß einer bevorzugten Ausgestaltung der Erfindung weisen das frequenzmodulierte erste Datensignal und das frequenzmodulierte zweite Datensignal eine gleiche Grundfrequenz auf. Dadurch sind die Frequenzmodulation bei der Datenübertragung sowie die Ermittlung der Bits des Datensignals des anderen Teilnehmers verhältnismäßig einfach durchführbar.

Gemäß einer vorteilhaften Ausgestaltung der Erfindung ist ein erster Frequenzhub des frequenzmodulierten ersten Datensignals gleich einem zweiten Frequenzhub des frequenzmodulierten zweiten Datensignals. Dadurch sind die beiden Teilnehmer identisch ausgebildet und einfach jeweils gegen andere Teilnehmer austauschbar. Ferner ist die zur Frequenzmodulation erforderliche Bandbreite minimiert.

Gemäß einer anderen vorteilhaften Ausgestaltung der Erfindung ist ein erster Frequenzhub des frequenzmodulierten ersten Datensignals ungleich einem zweiten Frequenzhub des frequenzmodulierten zweiten Datensignals. Dadurch sind die Datensignale der beiden Teilnehmer auch von einem zusätzlichen Empfänger voneinander unterscheidbar.

Ein erfindungsgemäßes System zur Datenübertragung umfasst mindestens einen ersten Teilnehmer und einen zweiten Teilnehmer, wobei der erste Teilnehmer ein frequenzmoduliertes erstes Datensignal mit ersten Daten sendet, welches der zweite Teilnehmer empfängt, und der zweite Teilnehmer ein frequenzmoduliertes zweites Datensignal mit zweiten Daten sendet, welches der erste Teilnehmer empfängt. Dabei sind der erste Teilnehmer und der zweite Teilnehmer zur Ausführung des erfindungsgemäßen Verfahrens eingerichtet.

Bei den Teilnehmern handelt es sich um Radarsensoren. In dem erfindungsgemäßen System ist somit eine Vollduplex Kommunikation zwischen zwei Radarsensoren möglich. Eine Kommunikation mittels Radarsensoren ist verhältnismäßig robust gegen Störungen und über verhältnismäßig große Übertragungsstrecken einsetzbar. In dem erfindungsgemäßen System ist es insbesondere möglich, dass beide Teilnehmer gleichzeitig senden und empfangen können.

Erfindungsgemäß weist der erste Teilnehmer einen ersten Tiefpassfilter zur Filterung des ersten Mischsignals zu einem ersten Basissignal und eine erste Signalverarbeitungseinheit zur Berechnung der zweiten Bits des zweiten Datensignals durch eine Verknüpfung von Spektralanteilen eines Basisspektrums des ersten Basissignals mit den ersten Bits des ersten Datensignals auf. Auch weist der zweite Teilnehmer einen zweiten Tiefpassfilter zur Filterung des zweiten Mischsignals zu einem zweiten Basissignal und eine zweite Signalverarbeitungseinheit zur Berechnung der ersten Bits des ersten Datensignals durch eine Verknüpfung von Spektralanteilen eines Basisspektrums des zweiten Basissignals mit den zweiten Bits des zweiten Datensignals auf.

Gemäß einer vorteilhaften Ausgestaltung der Erfindung wird das erste Datensignal von einem ersten spannungsgesteuerten Oszillator erzeugt, und das zweite Datensignal wird von einem zweiten spannungsgesteuerten Oszillator erzeugt. Spannungsgesteuerte Oszillatoren gestatten einfach durch Anlegen einer definierten Spannung die Erzeugung eines zu sendenden Datensignals. Durch einfache Variation der angelegten Spannung ist eine Frequenzmodulation einfach durchführbar.

Gemäß einer vorteilhaften Ausgestaltung der Erfindung weist der erste Teilnehmer einen ersten spannungsgesteuerten Oszillator zur Erzeugung des ersten Datensignals auf, und der zweite Teilnehmer weist einen zweiten spannungsgesteuerten Oszillator zur Erzeugung des zweiten Datensignals auf. Spannungsgesteuerte Oszillatoren gestatten einfach durch Anlegen einer definierten Spannung die Erzeugung eines zu sendenden Datensignals. Durch einfache Variation der angelegten Spannung ist eine Frequenzmodulation einfach durchführbar.

Gemäß einer vorteilhaften Weiterbildung der Erfindung weist der erste Teilnehmer einen ersten Multiplizierer zur Mischung des ersten Datensignals und des zweiten Datensignals durch Multiplikation zu dem ersten Mischsignal auf. Ferner weist der zweite Teilnehmer einen zweiten Multiplizierer zur Mischung des ersten Datensignals und des zweiten Datensignals durch Multiplikation zu dem zweiten Mischsignal auf. Multiplizierer zum Mischen von hochfrequenten Signale, insbesondere Radarsignalen, sind bekannt und kostengünstig.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:

Figur 1: eine schematische Darstellung eines Systems zur Datenübertragung,

Figur 2: eine schematische Darstellung von Spektren von frequenzmodulierten Datensignalen und

Figur 3: eine schematische Darstellung von Mischspektren von Mischsignalen.

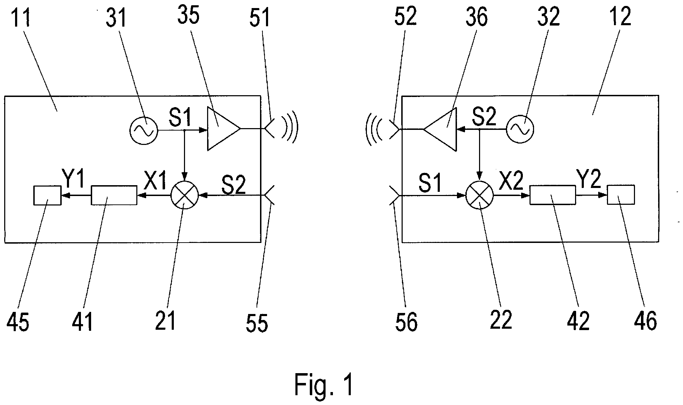

Figur 1 zeigt eine schematische Darstellung eines Systems zur Datenübertragung. Das System umfassend vorliegend einen ersten Teilnehmer 11 und einen zweiten Teilnehmer 12. Es ist auch denkbar, dass das System weitere Teilnehmer 11, 12 aufweist. Bei den Teilnehmern 11, 12 handelt es sich vorliegend um Radarsensoren, welche insbesondere zur Durchführung von Radarmessungen dienen.

Der erste Teilnehmer 11 sendet ein frequenzmoduliertes erstes Datensignal S1 mit ersten Daten, welches der zweite Teilnehmer 12 empfängt. Der zweite Teilnehmer 12 sendet ein frequenzmoduliertes zweites Datensignal S2 mit zweiten Daten, welches der erste Teilnehmer 11 empfängt. Die ersten Daten sind als binäre Bitfolge mit ersten Bits B1 in dem frequenzmodulierten ersten Datensignal S1 enthalten. Die zweiten Daten sind als binäre Bitfolge mit zweiten Bits B2 in dem frequenzmodulierten zweiten Datensignal S2 enthalten.

Der erste Teilnehmer 11 weist einen ersten spannungsgesteuerten Oszillator 31 zur Erzeugung des ersten Datensignals S1 auf. Das erste Datensignal S1 weist eine erste Frequenz auf, die von einer ersten Eingangsspannung abhängt, die an dem ersten spannungsgesteuerten Oszillator 31 anliegt. Der erste Teilnehmer 11 weist einen ersten Verstärker 35 zum Verstärken des ersten Datensignals S1 auf. Der erste Teilnehmer 11 weist eine erste Sendeantenne 51 zum Senden des ersten Datensignals S1 auf. Der erste Teilnehmer 11 weist auch eine erste Empfangsantenne 55 zum Empfangen des zweiten Datensignals S2 auf.

Der erste Teilnehmer 11 weist einen ersten Multiplizierer 21 zur Mischung des ersten Datensignals S1 und des zweiten Datensignal S2 auf. Der erste Multiplizierer 21 mischt dabei das von dem ersten spannungsgesteuerten Oszillator 31 erzeugte erste Datensignal S1 mit den von der ersten Empfangsantenne 55 empfangenen zweiten Datensignal S2 durch Multiplikation zu einem ersten Mischsignal X1.

Der erste Teilnehmer 11 weist einen ersten Tiefpassfilter 41 zur Filterung des ersten Mischsignals X1 zu einem ersten Basissignal Y1 auf. Der erste Tiefpassfilter 41 filtert hochfrequente Anteile aus einem Mischspektrum des ersten Mischsignals X1 heraus. Das erste Basissignal Y1 weist somit ein Basisspektrum mit nur niederfrequenten Anteilen auf.

Der erste Teilnehmer 11 weist eine erste Signalverarbeitungseinheit 45 auf. Die erste Signalverarbeitungseinheit 45 dient zur Berechnung der zweiten Bits B2 des zweiten Datensignals S2 durch eine Verknüpfung von Spektralanteilen des Basisspektrums des ersten Basissignals Y1 mit den ersten Bits B1 des ersten Datensignals S1. Auf die Berechnung der zweiten Bits B2 des zweiten Datensignals S2 in der ersten Signalverarbeitungseinheit 45 wird im Folgenden detailliert eingegangen.

Der zweite Teilnehmer 12 weist einen zweiten spannungsgesteuerten Oszillator 32 zur Erzeugung des zweiten Datensignals S2 auf. Das zweite Datensignal S2 weist eine zweite Frequenz auf, die von einer zweiten Eingangsspannung abhängt, die an dem zweiten spannungsgesteuerten Oszillator 32 anliegt. Der zweite Teilnehmer 12 weist einen zweiten Verstärker 36 zum Verstärken des zweiten Datensignals S2 auf. Der zweite Teilnehmer 12 weist eine zweite Sendeantenne 52 zum Senden des zweiten Datensignals S2 auf. Der zweite Teilnehmer 12 weist auch eine zweite Empfangsantenne 56 zum Empfangen des ersten Datensignals S1 auf.

Der zweite Teilnehmer 12 weist einen zweiten Multiplizierer 22 zur Mischung des ersten Datensignals S1 und des zweiten Datensignal S2 auf. Der zweite Multiplizierer 22 mischt dabei das von dem zweiten spannungsgesteuerten Oszillator 32 erzeugte zweite Datensignal S2 mit den von der zweiten Empfangsantenne 56 empfangenen ersten Datensignal S1 durch Multiplikation zu einem zweiten Mischsignal X2.

Der zweite Teilnehmer 12 weist einen zweiten Tiefpassfilter 42 zur Filterung des zweiten Mischsignals X2 zu einem zweiten Basissignal Y2 auf. Der zweite Tiefpassfilter 41 filtert hochfrequente Anteile aus einem Mischspektrum des zweiten Mischsignals X2 heraus. Das zweite Basissignal Y2 weist somit ein Basisspektrum mit nur niederfrequenten Anteilen auf.

Der zweite Teilnehmer 12 weist eine zweite Signalverarbeitungseinheit 46 auf. Die zweite Signalverarbeitungseinheit 46 dient zur Berechnung der ersten Bits B1 des ersten Datensignals S1 durch eine Verknüpfung von Spektralanteilen des Basisspektrums des zweiten Basissignals Y2 mit den zweiten Bits B2 des zweiten Datensignals S2. Auf die Berechnung der ersten Bits B1 des ersten Datensignals S1 in der zweiten Signalverarbeitungseinheit 46 wird im Folgenden detailliert eingegangen.

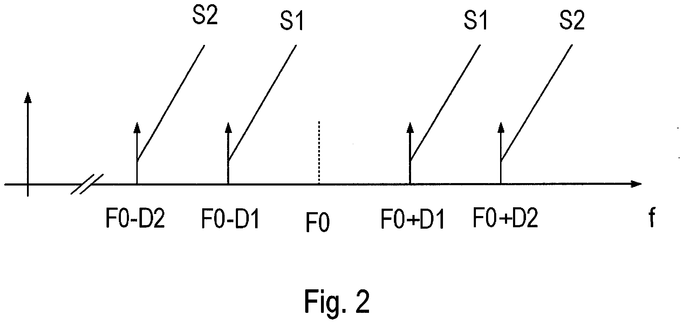

Figur 2 zeigt eine schematische Darstellung von Spektren von frequenzmodulierten Datensignalen S1, S2. Das erste Datensignal S1 wird von dem ersten spannungsgesteuerten Oszillator 31 erzeugt, und das zweite Datensignal S2 wird von dem zweiten spannungsgesteuerten Oszillator 32 erzeugt.

In dem frequenzmodulierten ersten Datensignal S1 sind die ersten Daten als binäre Bitfolge mit ersten Bits B1 enthalten. In dem frequenzmodulierten zweiten Datensignal S2 sind die zweiten Daten als binäre Bitfolge mit zweiten Bits B2 enthalten. Im vorliegenden Beispiel haben die Datensignale S1, S2 folgenden Verlauf in Abhängigkeit von der Zeit t:

$$S1\,(t) \quad = \quad \cos\,(\,2\,\pi\,t\,(F0 + D1)\,) \qquad \text{für} \qquad B1 = 1$$

$$S1\,(t) \quad = \quad \cos\,(\,2\,\pi\,t\,(F0 - D1)\,) \qquad \text{für} \qquad B1 = 0$$

$$S2\,(t) \quad = \quad \cos\,(\,2\,\pi\,t\,(F0 + D2)\,) \qquad \text{für} \qquad B2 = 1$$

$$S2\,(t) \quad = \quad \cos\,(\,2\,\pi\,t\,(F0 - D2)\,) \qquad \text{für} \qquad B2 = 0$$

Das erste Bit B1 des ersten Datensignals S1 weist also eine erste Frequenz auf, welche sich von einer Grundfrequenz F0 um einen ersten Frequenzhub D1 unterscheidet. Wenn das erste Bit B1 den Wert "1" hat, so entspricht die erste Frequenz einer Summe aus der Grundfrequenz F0 um dem ersten Frequenzhub D1. Wenn das erste Bit B1 den Wert "0" hat, so entspricht die erste Frequenz einer Differenz aus der Grundfrequenz F0 um dem ersten Frequenzhub D1.

Das zweite Bit B2 des zweiten Datensignals S2 weist also eine zweite Frequenz auf, welche sich von einer Grundfrequenz F0 um einen zweiten Frequenzhub D2 unterscheidet. Wenn das zweite Bit B2 den Wert "1" hat, so entspricht die zweite Frequenz einer Summe aus der Grundfrequenz F0 um dem zweiten Frequenzhub D2. Wenn das zweite Bit B2 den Wert "0" hat, so entspricht die zweite Frequenz einer Differenz aus der Grundfrequenz F0 um dem zweiten Frequenzhub D2.

Im vorliegenden Beispiel weisen das frequenzmodulierte erste Datensignal S1 und das frequenzmodulierte zweite Datensignal S2 die gleiche Grundfrequenz F0 auf. Im vorliegenden Beispiel ist der erste Frequenzhub D1 des frequenzmodulierten ersten Datensignals S1 ungleich dem zweiten Frequenzhub D2 des frequenzmodulierten zweiten Datensignals S2. Vorliegend ist der zweite Frequenzhub D2 doppelt so groß wie der erste Frequenzhub D1.

Es ist aber auch denkbar, dass der erste Frequenzhub D1 des frequenzmodulierten ersten Datensignals S1 gleich dem zweiten Frequenzhub D2 des frequenzmodulierten zweiten Datensignals S2 ist. In diesem Fall wäre also der zweite Frequenzhub D2 dann genau so groß wie der erste Frequenzhub D1.

Das erste Datensignal S1 und das zweite Datensignal S2 werden von dem ersten Multiplizierer 21 des ersten Teilnehmers 11 durch eine Multiplikation zu dem ersten Mischsignal X1 gemischt. Das erste Datensignal S1 und das zweite Datensignal S2 werden von dem zweiten Multiplizierer 22 des zweiten Teilnehmers 12 durch eine Multiplikation zu dem zweiten Mischsignal X2 gemischt. Das erste Mischsignal X1 und das zweite Mischsignal X2 sind somit gleich. Für die Mischsignale X1, X2 gilt somit in Abhängigkeit von der Zeit t:

$$X1\,(t) \quad = \quad X2\,(t) \quad = \quad S1\,(t) \; * \; S2\,(t)$$

$$= \tfrac{1}{2}\left( \cos\left( 2\,\pi\,t\,( D1 - D2)\right) + \cos\left( 2\,\pi\,t\,( 2\,F0 + D1 + D2)\right)\right) \qquad \text{für } B1 = 1 \text{ und } B2 = 1$$

$$= \tfrac{1}{2}\left( \cos\left( 2\,\pi\,t\,( D1 + D2)\right) + \cos\left( 2\,\pi\,t\,( 2\,F0 + D1 - D2)\right)\right) \qquad \text{für } B1 = 1 \text{ und } B2 = 0$$

$$= \tfrac{1}{2}\left( \cos\left( 2\,\pi\,t\,(-D1 - D2)\right) + \cos\left( 2\,\pi\,t\,( 2\,F0 - D1 + D2)\right)\right) \qquad \text{für } B1 = 0 \text{ und } B2 = 1$$

$$= \tfrac{1}{2}\left( \cos\left( 2\,\pi\,t\,(-D1 + D2)\right) + \cos\left( 2\,\pi\,t\,( 2\,F0 - D1 - D2)\right)\right) \qquad \text{für } B1 = 0 \text{ und } B2 = 0$$

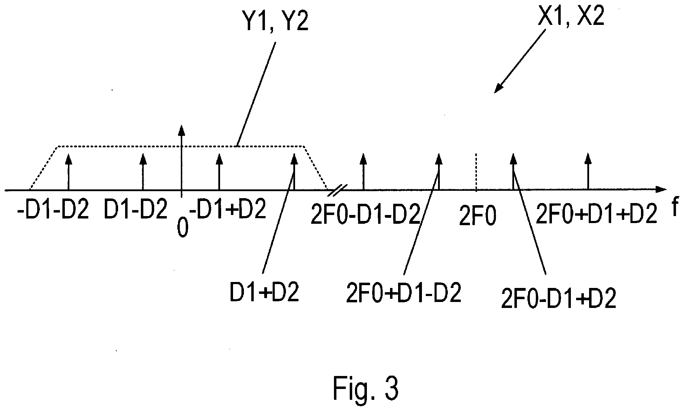

Figur 3 zeigt eine schematische Darstellung von Mischspektren von Mischsignalen. Die Mischspektren der Mischsignale X1, X2 weisen jeweils hochfrequente Anteile und niederfrequente Anteile auf. Das erste Mischsignal X1 wird von dem ersten Tiefpassfilter 41 des ersten Teilnehmers 11 zu dem ersten Basissignal Y1 gefiltert. Das zweite Mischsignal X2 wird von dem zweiten Tiefpassfilter 42 des zweiten Teilnehmers 12 zu dem zweiten Basissignal Y2 gefiltert. Das erste Basissignal Y1 und das zweite Basissignal Y2 sind somit gleich und weisen jeweils ein Basisspektrum mit nur niederfrequenten Anteilen auf.

Für die Basissignale Y1, Y2 gilt dabei:

$$Y1\,(t) \quad = \quad Y2\,(t)$$

$$= \quad \tfrac{1}{2} \cos\left( 2\,\pi\,t\,( D1 - D2)\right) \qquad \text{für } B1 = 1 \text{ und } B2 = 1$$

$$= \quad \tfrac{1}{2} \cos\left( 2\,\pi\,t\,( D1 + D2)\right) \qquad \text{für } B1 = 1 \text{ und } B2 = 0$$

$$= \quad \tfrac{1}{2} \cos\left( 2\,\pi\,t\,(-D1 - D2)\right) \qquad \text{für } B1 = 0 \text{ und } B2 = 1$$

$$= \quad \tfrac{1}{2} \cos\left( 2\,\pi\,t\,(-D1 + D2)\right) \qquad \text{für } B1 = 0 \text{ und } B2 = 0$$

Von der ersten Signalverarbeitungseinheit 45 des ersten Teilnehmers 11 werden durch eine Verknüpfung von Spektralanteilen des Basisspektrums des ersten Basissignals Y1 mit den ersten Bits B1 des ersten Datensignals S1 die zweiten Bits B2 des zweiten Datensignals S2 berechnet. Dabei werden nur die Beträge der Spektralanteile des Basisspektrums des ersten Basissignals Y1 berücksichtigt, nicht jedoch deren Vorzeichen. Für das erste Basissignal Y1 gilt somit:

$$Y1\,(t) \quad = \quad \tfrac{1}{2} \cos\left( 2\,\pi\,t\,(\,|\,D1 - D2\,|\,)\right) \qquad \text{für } B1 = 1 \text{ und } B2 = 1$$
$$\text{und} \quad \text{für } B1 = 0 \text{ und } B2 = 0$$

$$Y1\,(t) \quad = \quad \tfrac{1}{2} \cos\left( 2\,\pi\,t\,(\,|\,D1 + D2\,|\,)\right) \qquad \text{für } B1 = 1 \text{ und } B2 = 0$$
$$\text{und} \quad \text{für } B1 = 0 \text{ und } B2 = 1$$

Wenn also im Basisspektrum des ersten Basissignals Y1 ein Spektralanteil bei | D1 - D2 | erkannt wird, und das erste Bit B1 den Wert "1" hat, so wird für das zweite Bit B2 der Wert "1" berechnet.

Wenn im Basisspektrum des ersten Basissignals Y1 ein Spektralanteil bei | D1 - D2 | erkannt wird, und das erste Bit B1 den Wert "0" hat, so wird für das zweite Bit B2 der Wert "0" berechnet.

Wenn im Basisspektrum des ersten Basissignals Y1 ein Spektralanteil bei | D1 + D2 | erkannt wird, und das erste Bit B1 den Wert "1" hat, so wird für das zweite Bit B2 der Wert "0" berechnet.

Wenn im Basisspektrum des ersten Basissignals Y1 ein Spektralanteil bei | D1 + D2 | erkannt wird, und das erste Bit B1 den Wert "0" hat, so wird für das zweite Bit B2 der Wert "1" berechnet.

Die Verknüpfung der Spektralanteile des Basisspektrums des ersten Basissignals Y1 mit den ersten Bits B1 des ersten Datensignals S1 stellt eine Auswertung des Mischspektrums des ersten Mischsignals X1 und der ersten Bits B1 des ersten Datensignals S1 dar. Durch diese Auswertung werden somit die zweiten Bits B2 des zweiten Datensignals S2 in dem ersten Teilnehmer 11 ermittelt.

Von der zweiten Signalverarbeitungseinheit 46 des zweiten Teilnehmers 12 werden durch eine Verknüpfung von Spektralanteilen des Basisspektrums des zweiten Basissignals Y2 und der zweiten Bits B2 des zweiten Datensignals S2 die ersten Bits B1 des ersten Datensignals S1 berechnet. Dabei werden nur die Beträge der Spektralanteile des Basisspektrums des zweiten Basissignals Y2 berücksichtigt, nicht jedoch deren Vorzeichen. Für das zweite Basissignal Y2 gilt somit:

$$Y2 \, (t) \quad = \quad \tfrac{1}{2} \cos \left( 2 \, \pi \, t \, \left( \, | \, D1 - D2 \, | \, \right) \right) \qquad \text{für B1 = 1 und B2 = 1}$$

und für B1 = 0 und B2 = 0

$$Y2 \, (t) \quad = \quad \tfrac{1}{2} \cos \left( 2 \, \pi \, t \, \left( \, | \, D1 + D2 \, | \, \right) \right) \qquad \text{für B1 = 1 und B2 = 0}$$

und für B1 = 0 und B2 = 1

Wenn also im Basisspektrum des zweiten Basissignals Y2 ein Spektralanteil bei | D1 - D2 | erkannt wird, und das zweite Bit B2 den Wert "1" hat, so wird für das erste Bit B1 der Wert "1" berechnet.

Wenn im Basisspektrum des zweiten Basissignals Y2 ein Spektralanteil bei | D1 - D2 | erkannt wird, und das zweite Bit B2 den Wert "0" hat, so wird für das erste Bit B1 der Wert "0" berechnet.

Wenn im Basisspektrum des zweiten Basissignals Y2 ein Spektralanteil bei | D1 + D2 | erkannt wird, und das zweite Bit B2 den Wert "1" hat, so wird für das erste Bit B1 der Wert "0" berechnet.

Wenn im Basisspektrum des zweiten Basissignals Y2 ein Spektralanteil bei | D1 + D2 | erkannt wird, und das zweite Bit B2 den Wert "0" hat, so wird für das erste Bit B1 der Wert "1" berechnet.

Die Verknüpfung der Spektralanteile des Basisspektrums des zweiten Basissignals Y2 mit den zweiten Bits B2 des zweiten Datensignals S2 stellt eine Auswertung des Mischspektrums des zweiten Mischsignals X2 und der zweiten Bits B2 des zweiten Datensignals S2 dar. Durch diese Auswertung werden somit die ersten Bits B1 des ersten Datensignals S1 in dem zweiten Teilnehmer 12 ermittelt.

**Bezugszeichenliste**

| | |
|---|---|
| 11 | erster Teilnehmer |
| 12 | zweiter Teilnehmer |
| 21 | erster Multiplizierer |
| 22 | zweiter Multiplizierer |
| 31 | erster spannungsgesteuerter Oszillator |
| 32 | zweiter spannungsgesteuerter Oszillator |
| 35 | erster Verstärker |
| 36 | zweiter Verstärker |
| 41 | erster Tiefpassfilter |
| 42 | zweiter Tiefpassfilter |
| 45 | erste Signalverarbeitungseinheit |
| 46 | zweite Signalverarbeitungseinheit |
| 51 | erste Sendeantenne |
| 52 | zweite Sendeantenne |
| 55 | erste Empfangsantenne |
| 56 | zweite Empfangsantenne |
| f | Frequenz |
| F0 | Grundfrequenz |
| t | Zeit |
| B1 | erstes Bit |
| B2 | zweites Bit |
| D1 | erster Frequenzhub |
| D2 | zweiter Frequenzhub |
| S1 | erstes Datensignal |
| S2 | zweites Datensignal |
| X1 | erstes Mischsignal |
| X2 | zweites Mischsignal |
| Y1 | erstes Basissignal |
| Y2 | zweites Basissignal |

**Patentansprüche**

1. Verfahren zur Datenübertragung

zwischen einem ersten Teilnehmer (11) und einem zweiten Teilnehmer (12), wobei es sich bei den Teilnehmern (11, 12) um Radarsensoren handelt, und wobei der erste Teilnehmer (11) ein frequenzmoduliertes erstes Datensignal (S1) mit ersten Daten sendet, welches der zweite Teilnehmer (12) empfängt; und

der zweite Teilnehmer (12) ein frequenzmoduliertes zweites Datensignal (S2) mit zweiten Daten sendet, welches der erste Teilnehmer (11) empfängt; wobei

die ersten Daten als binäre Bitfolge mit ersten Bits (B1) in dem frequenzmodulierten ersten Datensignal (S1) enthalten sind, und

die zweiten Daten als binäre Bitfolge mit zweiten Bits (B2) in dem frequenzmodulierten zweiten Datensignal (S2) enthalten sind; wobei

das erste Datensignal (S1) und das zweite Datensignal (S2) zu einem ersten Mischsignal (X1) gemischt werden; und

durch eine Auswertung eines Mischspektrums des ersten Mischsignals (X1) und der ersten Bits (B1) des ersten Datensignals (S1) die zweiten Bits (B2) des zweiten Datensignals (S2) ermittelt werden; und wobei

das erste Datensignal (S1) und das zweite Datensignal (S2) zu einem zweiten Mischsignal (X2) gemischt werden; und

durch eine Auswertung eines Mischspektrums des zweiten Mischsignals (X2) und der zweiten Bits (B2) des zweiten Datensignals (S2) die ersten Bits (B1) des ersten Datensignals (S1) ermittelt werden,

**dadurch gekennzeichnet, dass**

das erste Mischsignal (X1) von einem ersten Tiefpassfilter (41) zu einem ersten Basissignal (Y1) gefiltert wird, und dass

durch eine Verknüpfung von Spektralanteilen eines Basisspektrums des ersten Basissignals (Y1) mit den ersten Bits (B1) des ersten Datensignals (S1)

von einer ersten Signalverarbeitungseinheit (45) die zweiten Bits (B2) des zweiten Datensignals (S2) berechnet werden, und dass

das zweite Mischsignal (X2) von einem zweiten Tiefpassfilter (42) zu einem zweiten Basissignal (Y2) gefiltert wird, und dass

durch eine Verknüpfung von Spektralanteilen eines Basisspektrums des zweiten Basissignals (Y1) mit den zweiten Bits (B2) des zweiten Datensignals (S2)

von einer zweiten Signalverarbeitungseinheit (46) die ersten Bits (B1) des ersten Datensignals (S1) berechnet werden.

2. Verfahren nach Anspruch 1,
**dadurch gekennzeichnet, dass**

das erste Datensignal (S1) von einem ersten spannungsgesteuerten Oszillator (31) erzeugt wird, und dass das zweite Datensignal (S2) von einem zweiten spannungsgesteuerten Oszillator (32) erzeugt wird.

3. Verfahren nach mindestens einem der vorangegangenen Ansprüche,
**dadurch gekennzeichnet, dass**

das erste Datensignal (S1) und das zweite Datensignal (S2) von einem ersten Multiplizierer (21) durch Multiplikation zu dem ersten Mischsignal (X1) gemischt werden, und dass

das erste Datensignal (S1) und das zweite Datensignal (S2) von einem zweiten Multiplizierer (22) durch Multiplikation zu dem zweiten Mischsignal (X2) gemischt werden.

4. Verfahren nach mindestens einem der vorangegangenen Ansprüche,
**dadurch gekennzeichnet, dass**

ein erstes Bit (B1) des ersten Datensignals (S1) eine erste Frequenz aufweist, welche sich von einer Grundfrequenz (F0) um einen ersten Frequenzhub (D1) unterscheidet, und dass

ein zweites Bit (B2) des zweiten Datensignals (S2) eine zweite Frequenz aufweist, welche sich von einer Grundfrequenz (F0) um einen zweiten Frequenzhub (D2) unterscheidet.

5. Verfahren nach mindestens einem der vorangegangenen Ansprüche,
**dadurch gekennzeichnet, dass**
das frequenzmodulierte erste Datensignal (S1) und das frequenzmodulierte zweite Datensignal (S2) eine gleiche Grundfrequenz (F0) aufweisen.

6. Verfahren nach mindestens einem der vorangegangenen Ansprüche,
   **dadurch gekennzeichnet, dass**
   ein erster Frequenzhub (D1) des frequenzmodulierten ersten Datensignals (S1) gleich einem zweiten Frequenzhub (D2) des frequenzmodulierten zweiten Datensignals (S2) ist.

7. Verfahren nach mindestens einem der Ansprüche 1 bis 5,
   **dadurch gekennzeichnet, dass**
   ein erster Frequenzhub (D1) des frequenzmodulierten ersten Datensignals (S1) ungleich einem zweiten Frequenzhub (D2) des frequenzmodulierten zweiten Datensignals (S2) ist.

8. System zur Datenübertragung, umfassend mindestens

   einen ersten Teilnehmer (11) und einen zweiten Teilnehmer (12), wobei
   es sich bei den Teilnehmern (11, 12) um Radarsensoren handelt, und wobei
   der erste Teilnehmer (11) ein frequenzmoduliertes erstes Datensignal (S1) mit ersten Daten sendet, welches der zweite Teilnehmer (12) empfängt, und
   der zweite Teilnehmer (12) ein frequenzmoduliertes zweites Datensignal (S2) mit zweiten Daten sendet, welches der erste Teilnehmer (11) empfängt,
   **dadurch gekennzeichnet, dass**
   der erste Teilnehmer (11) und der zweite Teilnehmer (12) zur Ausführung des Verfahrens nach einem der vorangegangenen Ansprüche eingerichtet sind,
   **dadurch gekennzeichnet, dass**
   der erste Teilnehmer (11) einen ersten Tiefpassfilter (41) zur Filterung des ersten Mischsignals (X1) zu einem ersten Basissignal (Y1) und
   eine erste Signalverarbeitungseinheit (45) zur Berechnung der zweiten Bits (B2) des zweiten Datensignals (S2) durch eine Verknüpfung von Spektralanteilen eines Basisspektrums des ersten Basissignals (Y1) mit den ersten Bits (B1) des ersten Datensignals (S1) aufweist, und dass
   der zweite Teilnehmer (12) einen zweiten Tiefpassfilter (42) zur Filterung des zweiten Mischsignals (X2) zu einem zweiten Basissignal (Y2) und
   eine zweite Signalverarbeitungseinheit (46) zur Berechnung der ersten Bits (B1) des ersten Datensignals (S1) durch eine Verknüpfung von Spektralanteilen eines Basisspektrums des zweiten Basissignals (Y2) mit den zweiten Bits (B2) des zweiten Datensignals (S2) aufweist.

9. System nach Anspruch 8,
   **dadurch gekennzeichnet, dass**

   der erste Teilnehmer (11) einen ersten spannungsgesteuerten Oszillator (31) zur Erzeugung des ersten Datensignals (S1) aufweist, und dass
   der zweite Teilnehmer (12) einen zweiten spannungsgesteuerten Oszillator (32) zur Erzeugung des zweiten Datensignals (S2) aufweist.

10. System nach mindestens einem der Ansprüche 8 bis 9,
    **dadurch gekennzeichnet, dass**

    der erste Teilnehmer (11) einen ersten Multiplizierer (21) zur Mischung des ersten Datensignals (S1) und des zweiten Datensignals (S2) durch Multiplikation zu dem ersten Mischsignal (X1) aufweist, und dass
    der zweite Teilnehmer (12) einen zweiten Multiplizierer (22) zur Mischung des ersten Datensignals (S1) und des zweiten Datensignals (S2) durch Multiplikation zu dem zweiten Mischsignal (X2) aufweist.

**Claims**

1. Method for data transmission

   between a first subscriber (11) and a second subscriber (12),
   the subscribers (11, 12) being radar sensors, and
   the first subscriber (11) sending a frequency-modulated first data signal (S1) comprising first data, which is received by the second subscriber (12); and

the second subscriber (12) sending a frequency-modulated second data signal (S2) comprising second data, which is received by the first subscriber (11);

the first data being included in the frequency-modulated first data signal (S1) as a binary bit sequence having first bits (B1), and

the second data being included in the frequency-modulated second data signal (S2) as a binary bit sequence having second bits (B2);

the first data signal (S1) and the second data signal (S2) being mixed to form a first mixed signal (X1); and

the second bits (B2) of the second data signal (S2) being ascertained by analysing a mixed spectrum of the first mixed signal (X1) and the first bits (B1) of the first data signal (S1); and the first data signal (S1) and the second data signal (S2) being mixed to form a second mixed signal (X2); and

the first bits (B1) of the first data signal (S1) being ascertained by analysing a mixed spectrum of the second mixed signal (X2) and the second bits (B2) of the second data signal (S2),

**characterised in that**

the first mixed signal (X1) is filtered by a first low-pass filter (41) to form a first base signal (Y1), and **in that**

the second bits (B2) of the second data signal (S2) are calculated by a first signal processing unit (45) by linking spectral components of a base spectrum of the first base signal (Y1) to the first bits (B1) of the first data signal (S1), and **in that**

the second mixed signal (X2) is filtered by a second low-pass filter (42) to form a second base signal (Y2), and **in that**

the first bits (B1) of the first data signal (S1) are calculated by a second signal processing unit (46) by linking spectral components of a base spectrum of the second base signal (Y1) to the second bits (B2) of the second data signal (S2).

2. Method according to claim 1,

**characterised in that**

the first data signal (S1) is generated by a first voltage-controlled oscillator (31), and **in that** the second data signal (S2) is generated by a second voltage-controlled oscillator (32).

3. Method according to at least one of the preceding claims,

**characterised in that**

the first data signal (S1) and the second data signal (S2) are mixed by a first multiplier (21) by being multiplied to form the first mixed signal (X1), and **in that**

the first data signal (S1) and the second data signal (S2) are mixed by a second multiplier (22) by being multiplied to form the second mixed signal (X2).

4. Method according to at least one of the preceding claims,

**characterised in that**

a first bit (B1) of the first data signal (S1) has a first frequency which differs from a fundamental frequency (F0) by a first frequency deviation (D1), and **in that**

a second bit (B2) of the second data signal (S2) has a second frequency which differs from a fundamental frequency (F0) by a second frequency deviation (D2).

5. Method according to at least one of the preceding claims,

**characterised in that**

the frequency-modulated first data signal (S1) and the frequency-modulated second data signal (S2) have the same fundamental frequency (F0).

6. Method according to at least one of the preceding claims,

**characterised in that**

a first frequency deviation (D1) of the frequency-modulated first data signal (S1) is the same as a second frequency deviation (D2) of the frequency-modulated second data signal (S2).

7. Method according to at least one of claims 1 to 5,

**characterised in that**

a first frequency deviation (D1) of the frequency-modulated first data signal (S1) is not the same as a second frequency deviation (D2) of the frequency-modulated second data signal (S2).

8. System for data transmission, comprising at least

   a first subscriber (11) and a second subscriber (12),
   the subscribers (11, 12) being radar sensors, and
   the first subscriber (11) sending a frequency-modulated first data signal (S1) comprising first data, which is received by the second subscriber (12); and
   the second subscriber (12) sending a frequency-modulated second data signal (S2) comprising second data, which is received by the first subscriber (11),
   **characterised in that**
   the first subscriber (11) and the second subscriber (12) are configured for carrying out the method according to any of the preceding claims,
   **characterised in that**
   the first subscriber (11) has a first low-pass filter (41) for filtering the first mixed signal (X1) to form a first base signal (Y1), and
   a first signal processing unit (45) for calculating the second bits (B2) of the second data signal (S2) by linking spectral components of a base spectrum of the first base signal (Y1) to the first bits (B1) of the first data signal (S1), and **in that**
   the second subscriber (12) has a second low-pass filter (42) for filtering the second mixed signal (X2) to form a second base signal (Y2), and
   a second signal processing unit (46) for calculating the first bits (B1) of the first data signal (S1) by linking spectral components of a base spectrum of the second base signal (Y2) to the second bits (B2) of the second data signal (S2).

9. System according to claim 8,
   **characterised in that**

   the first subscriber (11) has a first voltage-controlled oscillator (31) for generating the first data signal (S1), and **in that**
   the second subscriber (12) has a second voltage-controlled oscillator (32) for generating the second data signal (S2).

10. System according to at least one of claims 8 to 9,
    **characterised in that**
    the first subscriber (11) has a first multiplier (21) for mixing the first data signal (S1) and the second data signal (S2) by multiplying them to form the first mixed signal (X1), and **in that** the second subscriber (12) has a second multiplier (22) for mixing the first data signal (S1) and the second data signal (S2) by multiplying them to form the second mixed signal (X2).

**Revendications**

1. Procédé de transmission de données

   entre un premier abonné (11) et un second abonné (12), sachant que lesdits abonnés (11, 12) se présentent comme des capteurs radar et que le premier abonné (11) émet un premier signal de données (S1) modulé en fréquence, qui contient des premières données et est reçu par le second abonné (12) ; et
   sachant que le second abonné (12) émet un second signal de données (S2) modulé en fréquence, qui contient des secondes données et est reçu par le premier abonné (11) ; étant précisé que
   les premières données sont renfermées par le premier signal de données (S1), modulé en fréquence, sous la forme d'une séquence binaire comportant des premiers bits (B1), et que
   les secondes données sont renfermées par le second signal de données (S2), modulé en fréquence, sous la forme d'une séquence binaire comportant des seconds bits (B2) ; sachant que ledit premier signal de données (S1) et ledit second signal de données (S2) sont mélangés pour produire un premier signal mixte (X1) ; et
   les seconds bits (B2) dudit second signal de données (S2) sont spécifiés par une évaluation d'un spectre associatif dudit premier signal mixte (X1) et des premiers bits (B1) dudit premier signal de données (S1) ; et que ledit premier signal de données (S1) et ledit second signal de données (S2) sont mélangés pour produire un second signal mixte (X2) ; et
   les premiers bits (B1) dudit premier signal de données (S1) sont spécifiés par une évaluation d'un spectre associatif dudit second signal mixte (X2) et des seconds bits (B2) dudit second signal de données (S2), **caractérisé par le fait que**

le premier signal mixte (X1) est filtré par un premier filtre passe-bas (41), pour produire un premier signal de base (Y1) ; **par le fait que**

les seconds bits (B2) du second signal de données (S2) sont calculés, par une première unité (45) de traitement de signaux, par le biais d'une combinaison de composantes spectrales d'un spectre de base dudit premier signal de base (Y1) et des premiers bits (B1) du premier signal de données (S1) ; **par le fait que**

le second signal mixte (X2) est filtré par un second filtre passe-bas (42), pour produire un second signal de base (Y2) ; et **par le fait que**

les premiers bits (B1) du premier signal de données (S1) sont calculés, par une seconde unité (46) de traitement de signaux, par le biais d'une combinaison de composantes spectrales d'un spectre de base dudit second signal de base (Y2) et des seconds bits (B2) du second signal de données (S2).

2. Procédé selon la revendication 1,
   **caractérisé par le fait que**

   le premier signal de données (S1) est engendré par un premier oscillateur (31) commandé en tension ; et **par le fait que**

   le second signal de données (S2) est engendré par un second oscillateur (32) commandé en tension.

3. Procédé selon au moins l'une des revendications précédentes,
   **caractérisé par le fait que**

   le premier signal de données (S1) et le second signal de données (S2) sont mélangés par un premier multiplicateur (21), par le biais d'une multiplication, en vue d'obtenir le premier signal mixte (X1) ; et **par le fait que**

   ledit premier signal de données (S1) et ledit second signal de données (S2) sont mélangés par un second multiplicateur (22), par le biais d'une multiplication, en vue d'obtenir le second signal mixte (X2).

4. Procédé selon au moins l'une des revendications précédentes,
   **caractérisé par le fait**

   **qu'**un premier bit (B1) du premier signal de données (S1) présente une première fréquence qui se différencie d'une fréquence fondamentale (F0) par une première excursion de fréquence (D1) ; et par le fait

   **qu'**un second bit (B2) du second signal de données (S2) présente une seconde fréquence qui se différencie d'une fréquence fondamentale (F0) par une seconde excursion de fréquence (D2).

5. Procédé selon au moins l'une des revendications précédentes,
   **caractérisé par le fait que**
   le premier signal de données (S1) modulé en fréquence, et le second signal de données (S2) modulé en fréquence, présentent une même fréquence fondamentale (F0).

6. Procédé selon au moins l'une des revendications précédentes,
   **caractérisé par le fait**
   **qu'**une première excursion de fréquence (D1) du premier signal de données (S1), modulé en fréquence, est égale à une seconde excursion de fréquence (D2) du second signal de données (S2) modulé en fréquence.

7. Procédé selon au moins l'une des revendications 1 à 5,
   **caractérisé par le fait**
   **qu'**une première excursion de fréquence (D1) du premier signal de données (S1), modulé en fréquence, n'est pas égale à une seconde excursion de fréquence (D2) du second signal de données (S2) modulé en fréquence.

8. Système dévolu à la transmission de données, incluant au moins

   un premier abonné (11) et un second abonné (12), sachant que
   lesdits abonnés (11, 12) se présentent comme des capteurs radar, étant précisé que
   le premier abonné (11) émet un premier signal de données (S1) modulé en fréquence, qui contient des premières données et est reçu par le second abonné (12), et

que le second abonné (12) émet un second signal de données (S2) modulé en fréquence, qui contient des secondes données et est reçu par le premier abonné (11),

**caractérisé par le fait que**

le premier abonné (11) et le second abonné (12) sont agencés en vue de la mise en œuvre du procédé conforme à l'une des revendications précédentes,

**caractérisé par le fait que**

le premier abonné (11) est muni d'un premier filtre passe-bas (41) affecté au filtrage du premier signal mixte (X1), pour produire un premier signal de base (Y1) et

d'une première unité (45) de traitement de signaux, assignée au calcul des seconds bits (B2) du second signal de données (S2)

par une combinaison de composantes spectrales d'un spectre de base dudit premier signal de base (Y1) et des premiers bits (B1) du premier signal de données (S1) ; et **par le fait que**

le second abonné (12) est doté d'un second filtre passe-bas (42) affecté au filtrage du second signal mixte (X2), pour produire un second signal de base (Y2) et

d'une seconde unité (46) de traitement de signaux, assignée au calcul des premiers bits (B1) du premier signal de données (S1)

par une combinaison de composantes spectrales d'un spectre de base dudit second signal de base (Y2) et des seconds bits (B2) du second signal de données (S2).

9.  Système selon la revendication 8,
    **caractérisé par le fait que**

    le premier abonné (11) est pourvu d'un premier oscillateur (31) commandé en tension, conçu pour engendrer le premier signal de données (S1) ; et **par le fait que**
    le second abonné (12) est nanti d'un second oscillateur (32) commandé en tension, conçu pour engendrer le second signal de données (S2).

10. Système selon au moins l'une des revendications 8 à 9,
    **caractérisé par le fait que**

    le premier abonné (11) est muni d'un premier multiplicateur (21) affecté au mélange du premier signal de données (S1) et du second signal de données (S2) par le biais d'une multiplication, en vue d'obtenir le premier signal mixte (X1) ; et **par le fait que**
    le second abonné (12) est doté d'un second multiplicateur (22) dédié au mélange du premier signal de données (S1) et du second signal de données (S2) par le biais d'une multiplication, en vue d'obtenir le second signal mixte (X2).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180031673 A1
- EP 3502731 A1
- US 20190361113 A1
- US 20160047892 A1
- US 5101505 A
- US 5493583 A
- US 9036749 B2

**In der Beschreibung aufgeführte Nicht-Patentliteratur**

- A low Power Transmitter for Phase-Shift Keying Modulation Schemes. IEEE, 2006